# EUROPÄISCHE PATENTANMELDUNG

(11) **EP 3 584 025 A1**
(43) Veröffentlichungstag der Anmeldung: **25.12.2019**
(21) Anmeldenummer: 19179673.9
(22) Anmeldetag: 12.06.2019
(51) Int. Cl.: B23F 1/02, B23F 5/04, B23F 23/12

(54) **VERFAHREN ZUM TOPOLOGISCHEN WÄLZSCHLEIFEN VON ZAHNRAD-WERKSTÜCKEN UND SCHLEIFMASCHINE MIT EINER STEUERUNG ZUM TOPOLOGISCHEN WÄLZSCHLEIFEN VON ZAHNRAD-WERKSTÜCKEN**

(30) Priorität: 20.06.2018 DE 102018114820
(71) Anmelder: Klingelnberg GmbH, 42499 Hückeswagen (DE)
(72) Erfinder: Vogel, Olaf, 76275 Ettlingen (DE)
(74) Vertreter: Heusch, Christian

(57) **Zusammenfassung**

Verfahren zum kontinuierlichen Wälzschleifen von mindestens zwei Zahnrad-Werkstücken (10) mit einer topologisch modifizierten Schleifschnecke (2), die einen topologisch modifizierten Schneckenbereich umfasst, um an den Zahnrad-Werkstücken (10) Zahnflanken zu schleifen, die topologisch modifiziert sind, wobei das Verfahren mindestens die folgenden Schritte umfasst:
a) Bereitstellen eines ersten Zahnrad-Werkstücks,
b) Durchführen einer topologischen Wälzschleifbearbeitung durch das Ausführen von Relativbewegungen zwischen dem ersten Zahnrad-Werkstück und der Schleifschnecke (2), die umfasst
- eine relative Zustellbewegung,
- einen relativen Axialvorschub, der parallel oder schräg zur Werkzeugrotationsachse erfolgt, und
- eine relative Shiftbewegung,

c) Bereitstellen des zweiten Zahnrad-Werkstücks,
d) Ausführen einer relativen Sprungbewegung, die sich im Wesentlichen parallel oder schräg zu der Werkzeugrotationsachse (B) erstreckt, zwischen dem zweiten Zahnrad-Werkstück und der Schleifschnecke,
e) Wiederholen des Schritts b) für das zweite Zahnrad-Werkstück.

## Beschreibung

### Gebiet der Erfindung

Gegenstand der Erfindung ist ein Verfahren zum topologischen Wälzschleifen mehrerer Zahnrad-Werkstücke. Insbesondere geht es um eine Vorrichtung und um ein Verfahren zum topologischen Wälzschleifen von Zahnrad-Werkstücken mit einer mehrfach abrichtbaren Schleifschnecke. Außerdem geht es um eine Schleifmaschine mit einer Steuerung zum topologischen Wälzschleifen von Zahnrad-Werkstücken.

### Hintergrund der Erfindung, Stand der Technik

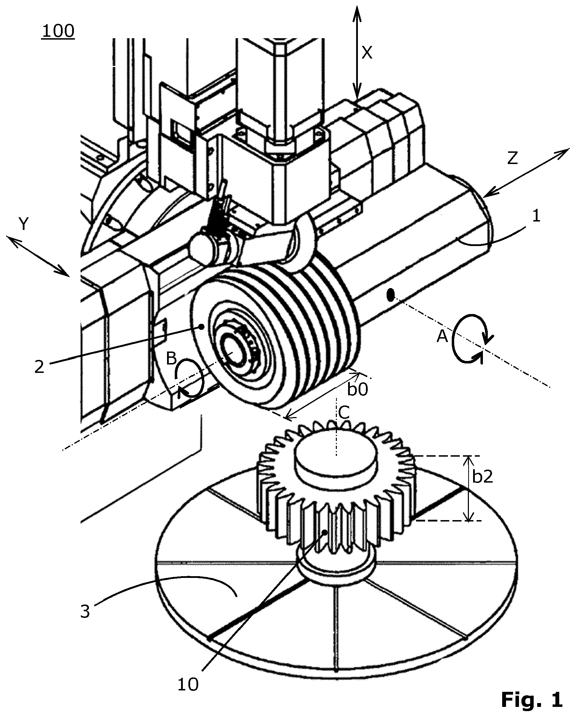

In Fig. 1 sind die Elemente einer beispielhaften Schleifmaschine 100 gezeigt, wobei in dieser Darstellung lediglich die wesentlichen Elemente beschriftet sind, und zwar sind dies die Werkzeugspindel 1 samt eines Schleifwerkzeugs 2 und eine Werkstückspindel 3 mit einem Werkstück 10. Außerdem sind in dieser Darstellung einige der Achsen gezeigt, die zum Wälzschleifen des Werkstücks 10 zum Einsatz kommen können. Es handelt sich hier um drei Linearachsen X, Y und Z. Außerdem gibt es eine Rotationsachse B, um das Schleifwerkzeug 2 drehantreiben zu können. Die Werkzeugspindel 1 samt des Schleifwerkzeugs 2 kann um eine Schwenkachse A geschwenkt werden, um die Steigung der Schleifschnecke 2 mit dem Schrägungswinkel des Werkstücks 10 in Einklang zu bekommen. Weiterhin gibt es eine Rotationsachse C (auch Werkstückachse genannt), um das Werkstück 10 drehantreiben zu können. Anhand der Fig. 1 ist zu erkennen, dass eine ganze Reihe von koordinierten Linear-, Dreh- und Schwenkbewegungen erforderlich sind, um ein Werkstück 10 mit einem Schleifwerkzeug 2 wälzschleifen zu können.

Einer der Faktoren, der einen Einfluss auf die Wirtschaftlichkeit einer solchen Schleifmaschine 100 hat, ist die Standzeit des Schleifwerkzeugs 2, das hier in Form einer Schleifschnecke gezeigt ist. Um so schneller das Werkzeug 2 abnutzt, um so weniger Werkstücke 10 können mit einem Werkzeug 2 bearbeitet werden. Es gibt daher verschiedene Strategien, um eine Schleifschnecke 2 möglichst wirtschaftlich einzusetzen.

Unter anderem wird mit verschiedenen Shift-Strategien gearbeitet. Das kontinuierliche Shiften (teilweise auch als Diagonalshiften bezeichnet) ist ein Vorgang, bei dem die Schleifmaschine 100 eine kontinuierliche Shiftbewegung parallel zur Z-Achse ausführt, um die Schleifschnecke 2 relativ zum Werkstück 10 zu verschieben. Durch diese Form des Shiftens wird sichergestellt, dass Bereiche mit neuen, bzw. ausreichend schnittigen Schleifkörnern der Schleifschnecke 2 zum Einsatz kommen. Durch das Shiften wird nicht nur die geometrische Genauigkeit der Zahnrad-Werkstücke 10 sichergestellt, sondern es können weitestgehend auch thermische Schäden an den Zahnflanken verhindert werden.

Es gibt auch nicht-kontinuierliche Shift-Strategien, die zum Beispiel darauf basieren, dass die Schleifschnecke 2 in unterschiedliche Bereiche zum Schruppen und zum Schlichten eines Werkstücks 10 unterteilt wird.

Es gibt auch Shift-Strategien, bei denen ein Shiften jeweils nach dem Bearbeiten eines Werkstücks 10 erfolgt, um z.B. zur Bearbeitung des nächsten Werkstücks einen anderen Bereich der Schleifschnecke 2 einsetzen zu können.

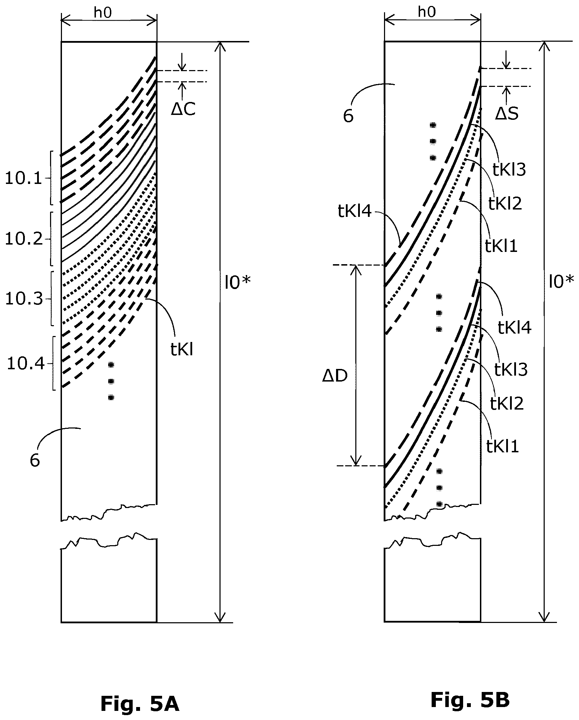

In Fig. 5A ist in stark schematisierter Form die Abwicklung einer Zahnflanke (Schneckenflanke) 6 einer Schleifschnecke 2 in vergrößerter Darstellung gezeigt, wobei die theoretischen Kontaktlinien tKI in schematischer Form angedeutet sind, die beim konventionellen Schleifen von 4 Werkstücken 10.1 - 10.4 entstehen. Die Kontaktlinien tKI der 4 Werkstücke 10.1 - 10.4 sind schematisch durch lang-strichlierte, durchgezogene, punktierte und kurz-strichlierte Kurvenscharen dargestellt. Jede dieser Kurvenscharen ist einem anderen Werkstück 10.1 - 10.4 zugeordnet. Man kann erkennen, dass aufgrund des Shiftens für jedes der 4 Werkstücke 10.1 - 10.4 jeweils ein Bereich mit neuen, bzw. ausreichend schnittigen Schleifkörnern der Schleifschnecke 2 zum Einsatz kommt. Bei den Kontaktlinien tKI, die in Fig. 5A gezeigt sind, handelt es sich um Wälzlinien auf einem Rechteck mit den Seitenlängen h0 (Zahnhöhe) und I0* (Bezugsschraubenlinienlänge).

Es geht hier um das sogenannte topologische Wälzschleifen. Beim topologischen Wälzschleifen von Zahnrad-Werkstücken 10 kommt eine Schleifschnecke 2 zum Einsatz, die mindestens einen Schneckenbereich umfasst, der topologisch modifiziert ist. Mit dem topologisch modifizierten Schneckenbereich kann den Zahnflanken des Zahnrad-Werkstücks 10 innerhalb gewisser Grenzen eine modifizierte Zahnflankenform gegeben werden. Die gewünschte Geometrie der Zahnflanken ist dabei in verzerrter Form auf den Schleifschneckenflankenflächen vorgegeben und wird durch genau kontrollierte, CNC-gesteuerte Relativbewegungen zwischen der Schleifschnecke 2 und dem Zahnrad-Werkstück 10 entzerrt auf dessen Zahnflanken abgebildet.

Während des topologischen Wälzschleifens eines Zahnrad-Werkstücks 10 wird der gesamte topologisch modifizierte Schneckenbereich zum Einsatz gebracht, um an dem Zahnrad-Werkstück 10 eine modifizierte Zahnflankenform, z.B. Zahnflanken mit modifiziertem Eingriffswinkel, herstellen zu können.

Ein Schleifwerkzeug 2 kann einen Schrupp- und einen Schlichtbereich umfassen. Wenn der topologisch modifizierte Schneckenbereich im Schlichtbereich liegt, so kann das Schlichten mit dem topologisch modifizierten Schneckenbereich erfolgen, während zuvor das Schruppen auf konventionelle Art und Weise durchgeführt wurde.

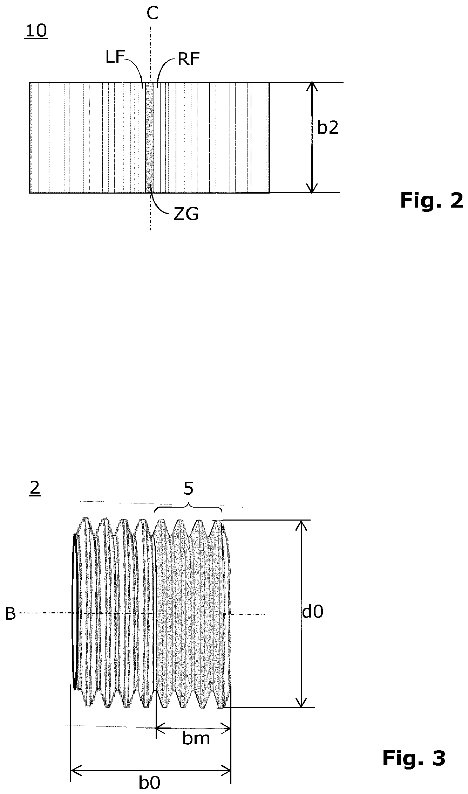

Zusätzlich zu dem Shiften, das durchgeführt wird, um den gesamten topologisch modifizierten Schneckenbereich einzusetzen, wird außerdem beim Wälzschleifen ein Schleifhub vorgenommen, der erforderlich ist, um Werkstücke 10 (siehe z.B. Fig. 1 oder 2) über deren gesamte Zahnbreite b2 schleifen zu können. Der Schleifhub umfasst bei einem geradverzahnten Stirnrad 10, wie in Fig. 1 gezeigt, eine Linearbewegung der Schleifschnecke 2 parallel zur X-Achse der Maschine 100.

Weiterhin wird eine Zustellbewegung ausgeführt, um einen Zahn der Schleifschnecke 2 bis zu einer endgültigen Tiefe in eine Zahnlücke des Zahnrad-Werkstücks 10 eindringen zu lassen. Die Zustellbewegung erfolgt beim Beispiel der Fig. 1 parallel zur Y-Achse der Maschine 100.

Es besteht der Bedarf das topologische Wälzschleifen mit einer Schleifschnecke weiter zu optimieren. Vor allem ist das Erzielen von verbesserten Standzeiten der Schleifschnecken ein wesentlicher Aspekt von Untersuchungen.

Aufgabe der vorliegenden Erfindung ist es daher, ein Verfahren zum topologischen Wälzschleifen bereit zu stellen, das effizienter ist als bisherige topologische Wälzschleifverfahren.

Aufgabe der vorliegenden Erfindung ist es auch eine Steuerung oder Software für eine Schleifmaschine zum topologisch wälzschleifenden Bearbeiten von Zahnrädern zu entwickeln, die eine reproduzierbar hohe Präzision der schleifenden Bearbeitung und trotzdem einen hohe Effizienz ermöglichen. Ausserdem soll ein geeignetes Verfahren bereit gestellt werden, das dazu beiträgt die Effizienz zu verbessern.

Insbesondere geht es darum eine Schleifmaschine für das topologische Wälzschleifen von Stirnrädern bereit zu stellen, die eine gleichbleibend hohe Präzision der schleifenden Bearbeitung einer Serie von Werkstücken bei optimierter Standzeit des Schleifwerkzeugs ermöglicht.

Ein entsprechendes Verfahren der Erfindung zeichnet sich durch die Merkmale des Patentanspruchs 1 aus.

Das Verfahren der Erfindung ist zum kontinuierlichen Wälzschleifen von mindestens zwei Zahnrad-Werkstücken ausgelegt, wobei eine topologisch modifizierten Schleifschnecke zum Einsatz kommt, die einen topologisch modifizierten Schneckenbereich umfasst, um an den Zahnrad-Werkstücken Zahnflanken zu schleifen, die topologisch modifiziert sind. Das Verfahren umfasst mindestens die folgenden Schritte:
a) Bereitstellen eines ersten Zahnrad-Werkstücks,
b) Durchführen einer topologischen Wälzschleifbearbeitung durch das Ausführen von Relativbewegungen zwischen dem ersten Zahnrad-Werkstück und der Schleifschnecke, die umfasst
   - eine relative Zustellbewegung,
   - einen relativen Axialvorschub, der parallel oder schräg zur Werkzeugrotationsachse erfolgt, und
   - eine relative Shiftbewegung,
c) Bereitstellen eines zweiten Zahnrad-Werkstücks,
d) Ausführen einer relativen Sprungbewegung[c1], die sich im Wesentlichen parallel oder schräg zu der Werkzeugrotationsachse erstreckt, zwischen dem zweiten Zahnrad-Werkstück und der Schleifschnecke,
e) Wiederholen des Schritts b) zum Durchführen einer topologischen Wälzschleifbearbeitung für das zweite Zahnrad-Werkstück.

Die erwähnte relative Shiftbewegung kann z.B. in bekannter Art und Weise als Shiftweg pro Werkzeugumdrehung definiert sein.

Bei mindestens einem Teil der Ausführungsformen wird die relative Sprungbewegung so ausgeführt, dass die topologische Wälzschleifbearbeitung des ersten Zahnrad-Werkstücks in einem anderen Kontaktbereich der Schleifschnecke beginnt als die topologische Wälzschleifbearbeitung des zweiten Zahnrad-Werkstücks.

Bei mindestens einem Teil der Ausführungsformen wird die relative Sprungbewegung so ausgeführt, dass sie klein ist in Bezug zur Ausdehnung (Länge) des topologisch modifizierten Schneckenbereichs, um durch das Ausführen der relativen Sprungbewegung und der topologischen Wälzschleifbearbeitung nicht den topologisch modifizierten Schneckenbereich zu verlassen. Insbesondere geht es um relative Sprungbewegungen, die kleiner sind, als der verwendete Shiftweg pro Werkzeugumdrehung, der für die topologische Wälzschleifbearbeitung vorgegeben ist.

Bei mindestens einem Teil der Ausführungsformen wird die relative Sprungbewegung nur im Rahmen einer Schlichtbearbeitung zwischen dem topologischen Wälzschleifen eines ersten Zahnrad-Werkstücks und dem topologischen Wälzschleifen eines zweiten Zahnrad-Werkstücks ausgeführt.

Bei mindestens einem Teil der Ausführungsformen wird die relative Sprungbewegung durch eine Sprungweite definiert, die wiederum aus einer Eingriffsdichte ermittelt wird, wobei diese Eingriffsdichte ein Maß ist, das die Verteilung der Belastung der Schleifschnecke charakterisiert, wenn eine bestimmte Anzahl von Werkstücken mit ein und derselben Schleifschnecke gefertigt werden soll.

Bei mindestens einem Teil der Ausführungsformen wird die relative Sprungbewegung durch eine konstante Sprungweite definiert. D.h. die Sprungbewegung, die vor dem topologisch wälzenden Schleifen z.B. eines zweiten Zahnrad-Werkstücks durchgeführt wird, hat dieselbe Sprungweite wie die Sprungbewegung, die vor dem topologisch wälzenden Schleifen z.B. eines zehnten Zahnrad-Werkstücks durchgeführt wird.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Perspektivansicht einer Schleifmaschine des Standes der Technik, die dazu ausgelegt ist mit einem Schleifwerkzeug ein Werkstück schleifend zu bearbeiten;
- **FIG. 2**: zeigt eine schematische Seitenansicht eines beispielhaften, geradverzahnten Stirnrads des Standes der Technik, wobei anhand dieser Ansicht Grundbegriffe definiert werden;
- **FIG. 3**: zeigt eine schematische Seitenansicht einer beispielhaften, Schleifschnecke des Standes der Technik, wobei anhand dieser Ansicht Grundbegriffe definiert werden;
- **FIG. 4A**: zeigt eine stark schematisierte grafische Darstellung der Schritte eines Verfahrens der Erfindung, wobei diese Schritte zum topologischen Wälzschleifen eines ersten Zahnrad-Werkstücks durchgeführt werden;
- **FIG. 4B**: zeigt eine stark schematisierte grafische Darstellung der Schritte eines Verfahrens der Erfindung, wobei diese Schritte zum topologischen Wälzschleifen eines zweiten Zahnrad-Werkstücks durchgeführt werden;
- **FIG.5A**: zeigt eine stark schematisierte Abwicklung einer Zahnflanke einer Schleifschnecke in vergrößerter Darstellung, wobei die theoretischen Kontaktlinien in schematischer Form angedeutet sind, die beim konventionellen Wälzschleifen von 4 Werkstücken entstehen;
- **FIG.5B**: zeigt eine stark schematisierte Abwicklung einer Zahnflanke einer topologischen Schleifschnecke in vergrößerter Darstellung, wobei die theoretischen Kontaktlinien in schematischer Form angedeutet sind, die beim topologischen Schleifen von 4 Zahnrad-Werkstücken entstehen, wenn jeweils eine relative Sprungbewegung, gemäß Erfindung, vor dem Schleifen jedes nachfolgenden Zahnrad-Werkstücks durchgeführt wird;
- **FIG. 6**: zeigt eine schematische Perspektivansicht einer Schleifmaschine gemäß einer Ausführungsform der Erfindung.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es ist bekannt, dass man mit dem topologischen Wälzschleifen in einem kontinuierlichen Schleifverfahren Zahnrad-Werkstücke 10 mit Zahnflanken erzeugen kann, die gezielt modifiziert wurden. So kann man durch den Einsatz einer Schleifschnecke 2, die einen topologisch modifizierten Schneckenbereich 5 umfasst (siehe z.B. Fig. 3), beispielsweise eine Balligkeit der Zahnflanken LF und RF der Zahnrad-Werkstücke 10 (siehe z.B. Fig. 2) erzeugen. Durch das Vorsehen einer geeigneten Balligkeit kann die Empfindlichkeit gegenüber Lagefehlern beim Einbau des Zahnrades 10 reduziert werden. Ausserdem kann die Geräuschemission vorteilhaft beeinflusst werden.

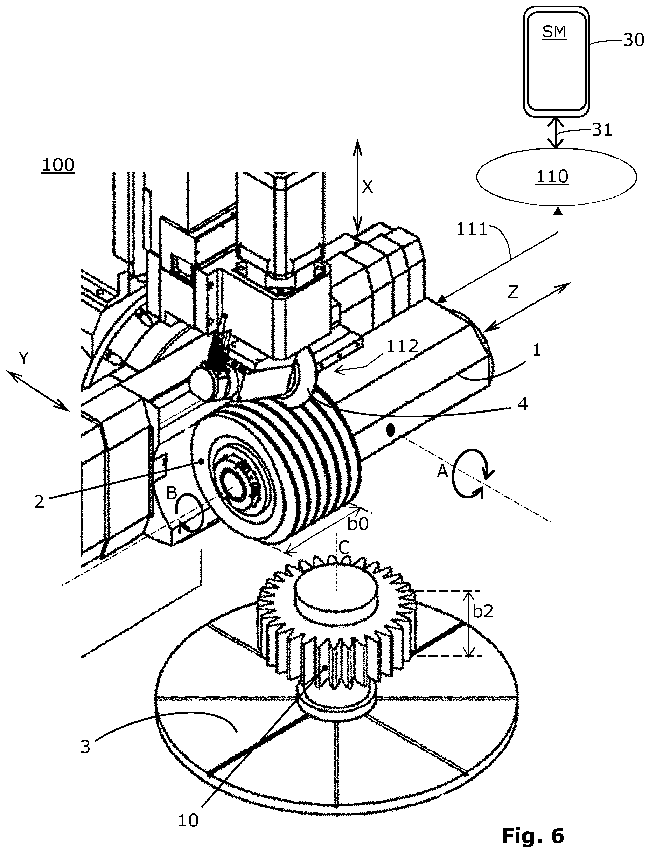

Das topologische Wälzschleifen kann im Prinzip dazu eingesetzt werden, um Abbildungsfehler (auch Verschränkung genannt) zu reduzieren oder ganz zu verhindern, die sich beim Wälzschleifen mit einer Schleifschnecke 2 aufgrund der sich kontinuierlich ändernden Lage der Berührlinien ergeben. Dies wird erreicht, indem der geeignet modifizierte Schneckenbereich 5 einer Schleifschnecke 2 in genau kontrollierter Art und Weise zum Einsatz kommt. Dies erfordert eine hochpräzise Maschinenbasis der Schleifmaschine 100 (siehe z.B. Fig. 6) und optimierte Antriebe, die wiederholgenau die Schleifschnecke 2 relativ zum Zahnrad-Werkstück 10 positionieren und bewegen.

Eine Schleifschnecke 2, die im Zusammenhang mit dem vorliegend beschriebenen Verfahren eingesetzt werden kann, weist mindestens einen topologisch modifizierten Schneckenbereich 5 auf, wie in Fig. 3 angedeutet. Dieser topologisch modifizierte Schneckenbereich kann z.B. einen über die Breite bm des Schneckenbereichs 5 veränderten Profilwinkel aufweisen. Der topologisch modifizierte Schneckenbereich 5 erstreckt sich bei dem in Fig. 3 gezeigten Beispiel ca. über die Hälfte der Schneckenbreite b0. Der Durchmesser der Schleifschnecke 2 ist mit d0 bezeichnet. Dieser Durchmesser d0 reduziert sich mit der Zeit, da beim Abrichten der Schleifschnecke 2 Material abgetragen wird.

Der topologisch modifizierte Schneckenbereich 5 kann z.B. durch eine Änderung der Steigungshöhe ballig modifiziert sein, um nur ein Beispiel für eine mögliche Modifikation der Topologie der Schleifschnecke 2 zu geben. Die entsprechenden Modifikationen der Schleifschnecke 2 sind jedoch meist so gering, dass sie kaum sichtbar sind. In Fig. 3 ist der topologisch modifizierte Schneckenbereich 5 grau hinterlegt, um ihn überhaupt sichtbar machen zu können.

Fig. 2 zeigt eine schematische Seitenansicht eines beispielhaften geradverzahnten Stirnrads 10. Die Erfindung lässt sich jedoch auch auf schrägverzahnte Zahnrad-Werkstücke 10 anwenden. An dem Zahnrad-Werkstück 10 der Fig. 2 ist eine Zahnlücke besonders hervorgehoben, die links von der Zahnflanke LF und rechts von der Zahnflanke RF begrenzt ist. Der Zahngrund ZG ist grau dargestellt. Die Zahnbreite ist durch das Bezugszeichen b2 gekennzeichnet.

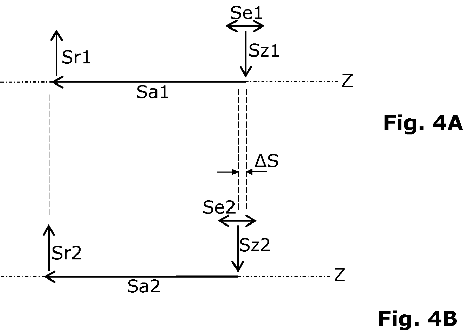

Bei mindestens einem Teil der Ausführungsformen des Verfahrens der Erfindung, geht es um ein Verfahren zum kontinuierlichen Wälzschleifen von mindestens zwei Zahnrad-Werkstücken 10.1, 10.2 einer Serie von Zahnrad-Werkstücken. Details der entsprechenden Verfahrensschritte sind in den Figuren 4A und 4B in stark schematisierter Form gezeigt. Es kommt eine topologisch modifizierte Schleifschnecke 2 zum Einsatz, die mindestens einen topologisch modifizierten Schneckenbereich 5 umfasst, wie beispielhaft in Fig. 3 gezeigt. Das kontinuierliche Wälzschleifverfahren wird so durchgeführt, dass an den Zahnrad-Werkstücken 10.1, 10.2 Zahnflanken LF, RF geschliffen werden, die topologisch modifiziert sind. Bei der Darstellung der Figuren 4A und 4B fällt die Werkzeug(rotations)achse B mit der Z-Achse (Shiftachse) zusammen.

Das Verfahren der Erfindung umfasst mindestens die folgenden Schritte, wobei die Verwendung von Buchstaben a), b), A. usw. nicht zwingend eine entsprechende chronologische Reihenfolge der Schritte implizieren soll:
a) Bereitstellen eines ersten Zahnrad-Werkstücks 10.1, das z.B. aus einem Teilelager entnommen und an der 1. Werkstückspindel 3 einer Schleifmaschine 100 eingespannt werden kann.
b) Durchführen einer topologischen Wälzschleifbearbeitung durch das Ausführen von Relativbewegungen zwischen dem ersten Zahnrad-Werkstück 10.1 und der Schleifschnecke 2, die an der Werkzeugspindel 1 der Schleifmaschine 100 eingespannt ist. Diese topologische Wälzschleifbearbeitung umfasst mindestens die folgenden Schritte:
   A. eine relative Zustellbewegung Sz1, um die Schleifschnecke 2 mit dem Zahnrad-Werkstück 10.1 in Eingriff zu bringen. Um die Zähne der Schleifschnecke 2 sauber in die Zahnlücken des ersten Zahnrad-Werkstücks 10.1 einführen zu können, wird im Rahmen des Zustellens, oder vor dem Zustellen, ein Einmitten Se1 vorgenommen. Das Einmitten Se1 ist in Fig. 4A rein schematisch durch einen Doppelpfeil symbolisiert, der hier quer zur Richtung der Zustellbewegung Sz1 verläuft.
   B. einen relativen Axialvorschub Sa1, der parallel oder schräg zur Werkzeugrotationsachse B erfolgt. Bei dem Beispiel in Fig. 4A verläuft der Axialvorschub Sa1 parallel zur Werkzeugrotationsachse B, die bei diesem Beispiel mit der Z-Achse zusammen fällt.
   C. eine relative Shiftbewegung, die ein Verschieben und Verdrehen umfasst (das Verdrehen ist nicht in Fig. 4A zu erkennen).

Am Ende der Wälzschleifbearbeitung des ersten Zahnrad-Werkstücks 10.1 wird typischerweise eine Rückzugsbewegung Sr1 durchgeführt, um den Eingriff zwischen dem Zahnrad-Werkstück 10.1 und der Schleifschnecke 2 aufzuheben.

Nachdem das erste Zahnrad-Werkstück 10.1 fertig geschliffen wurde, wird ein weiteres Zahnrad-Werkstück (z.B. das zweite Zahnrad-Werkstück 10.2) der Serie von Zahnrad-Werkstücken bereit gestellt. Die Bearbeitung des zweiten Zahnrad-Werkstücks 10.2 ist in Fig. 4B gezeigt. Diese topologische Wälzschleifbearbeitung umfasst mindestens die folgenden Schritte:
c) Bereitstellen des zweiten Zahnrad-Werkstücks 10.2, das z.B. aus dem Teilelager entnommen und an der 1. Werkstückspindel 3 einer Schleifmaschine 100 eingespannt werden kann.
d) Ausführen einer relativen Sprungbewegung, die sich im Wesentlichen parallel oder schräg zu der Werkzeugrotationsachse B erstreckt, wobei diese Sprungbewegung zwischen dem zweiten Zahnrad-Werkstück 10.2 und der Schleifschnecke 2 durch das Bewegen mindestens einer Achse der Schleifmaschine 100 ausgeführt wird. Der Sinn und Zweck des Ausführens einer relativen Sprungbewegung wird im Folgenden im Detail erläutert. Im Bereich zwischen den Figuren 4A und 4B ist die relative Sprungbewegung durch eine Sprungweite ΔS dargestellt. Die Sprungweite ΔS ist übertrieben groß dargestellt, um sie überhaupt sichtbar machen zu können.
e) Wiederholen des Schritts b) für das zweite Zahnrad-Werkstück 10.2, um das zweite Zahnrad-Werkstück 10.2 einer topologischen Wälzschleifbearbeitung zu unterziehen. Diese topologische Wälzschleifbearbeitung umfasst mindestens die folgenden Schritte
   A. eine relative Zustellbewegung Sz2, um die Schleifschnecke 2 mit dem Zahnrad-Werkstück 10.2 in Eingriff zu bringen. Um die Zähne der Schleifschnecke 2 sauber in die Zahnlücken des zweiten Zahnrad-Werkstücks 10.2 einführen zu können, wird im Rahmen des Zustellens, oder vor dem Zustellen, ein Einmitten Se2 vorgenommen. Das Einmitten Se2 ist in Fig. 4B rein schematisch durch einen Doppelpfeil symbolisiert, der hier quer zur Richtung der Zustellbewegung Sz2 verläuft.
   B. einen relativen Axialvorschub Sa2, der parallel oder schräg zur Werkzeugrotationsachse B erfolgt. Bei dem Beispiel in Fig. 4B verläuft der Axialvorschub Sa2 parallel zur Werkzeugrotationsachse B.
   C. eine relative Shiftbewegung, die ein Verschieben und Verdrehen umfasst (das Verdrehen ist nicht in Fig. 4B zu erkennen).

Am Ende der Wälzschleifbearbeitung des zweiten Zahnrad-Werkstücks 10.2 wird typischerweise eine Rückzugsbewegung Sr2 durchgeführt, um den Eingriff zwischen dem Zahnrad-Werkstück 10.2 und der Schleifschnecke 2 aufzuheben.

Nachdem das zweite Zahnrad-Werkstück 10.2 fertig geschliffen wurde, kann beispielsweise ein weiteres Zahnrad-Werkstück (z.B. ein Zahnrad-Werkstück 10.3, 10.4) der Serie von Zahnrad-Werkstücken bereit gestellt und bearbeitet werden. Der Bearbeitungsvorgang kann aber auch hier abgebrochen werden.

Ohne das Ausführen einer relativen Sprungbewegung, würde die topologische Wälzschleifbearbeitung des ersten Zahnrad-Werkstücks 10.1 an derselben Stelle der Schleifschnecke 2 beginnen wie die Wälzschleifbearbeitung des zweiten Zahnrad-Werkstücks 10.2 und auch weiterer Zahnrad-Werkstücke. Hier wird kurz auf die Fig. 5B Bezug genommen. Ohne das Ausführen einer relativen Sprungbewegung, würde die topologische Wälzschleifbearbeitung aller Zahnrad-Werkstücke einer Serie von Zahnrad-Werkstücken entlang derselben theoretischen Kontaktlinie tKI (z.B. entlang der in Fig. 5B als durchgezogene Kurve gezeigte Kontaktlinie) erfolgen.

Bei allen Ausführungsformen wird vor der topologischen Wälzschleifbearbeitung eines nachfolgenden Zahnrad-Werkstücks (z.B. vor der Wälzschleifbearbeitung des zweiten Zahnrad-Werkstücks 10.2), eine relative Sprungbewegung ausgeführt, die z.B. durch eine Sprungweite ΔS definiert sein kann (wie im Bereich zwischen den Figuren 4A und 4B oder in Fig. 5B schematisch angedeutet). Diese Sprungbewegung erfolgt stets innerhalb des topologisch modifizierten Schneckenbereichs 5 der Schleifschnecke 2. D.h. eine solche Sprungbewegung wird vorzugsweise nur ausgeführt, wenn der topologisch modifizierte Schneckenbereich 5 zur Wälzschleifbearbeitung eines nachfolgenden Zahnrad-Werkstücks zum Einsatz kommen soll, und die relative Sprungbewegung wird so ausgeführt, dass die topologischen Wälzschleifbearbeitung nicht aus dem modifizierten Schneckenbereich 5 heraus führt.

Durch das Vorgeben und Ausführen einer relativen Sprungbewegung wird sicher gestellt, dass die Wälzschleifbearbeitung des nachfolgenden Zahnrad-Werkstücks an einer anderen Stelle des topologisch modifizierten Schneckenbereichs 5 der Schleifschnecke 2 beginnt und einer anderen theoretischen Kontaktlinie tKI folgt, wie in Fig. 5B angedeutet. Da es sich um eine Schleifschnecke 2 handelt, die einen topologisch modifizierten Schneckenbereich 5 umfasst, hat die relative Sprungbewegung jedoch zur Folge, sich das erste Zahnrad-Werkstück 10.1 geometrisch minimal von dem zweiten Zahnrad-Werkstück 10.2 unterscheidet. Diese Unterschiede sind jedoch derart minimal, dass sie keine Auswirkungen auf das Laufverhalten der entsprechend geschliffenen Zahnrad-Werkstücke 10.1, 10.2, 10.3, 10.4 haben.

Bei mindestens einem Teil der Ausführungsformen wird die relative Sprungbewegung anhand einer Eingriffsdichte EgD definiert, wobei die Eingriffsdichte EgD eine werkzeugspezifische Größe sein kann, d.h. bei anders dimensionierten und/oder anders beschaffenen (z.B. anderes belegten Schleifschnecken) Schleifschnecken 2 kann auch die Eingriffsdichte EgD anders sein.

Bei mindestens einem Teil der Ausführungsformen geht man von einer Eingriffsdichte EgD als Maß für einen oberen Grenzwert aus, das sich beim Einsatz einer Schleifschnecke 2 mit deren minimal gültigen Durchmesser d0 beim Wälzschleifen von Zahnrad-Werkstücken bewährt hat. Siehe hierzu die europäische Patentanmeldung EP 102018109067.6, die am 17. April 2018 im Namen der Klingelnberg GmbH eingereicht wurde. Durch die relative Sprungbewegung, wie im hier vorliegenden Dokument beschrieben und beansprucht, kann beim Einsatz des topologisch modifizierten Schneckenbereichs 5 der Schleifschnecke 2 sichergestellt werden, dass die Flanken der Schleifschnecke 2 so eingesetzt werden, dass sich keine akkumulierte Eingriffsdichte ergibt, die größer ist als dieser obere Grenzwert. Ein solcher oberer Grenzwert kann aber auch auf andere Art und Weise (z.B. experimentell) festgelegt werden.

Diese Eingriffsdichte EgD kann, wie in der genannten europäischen Patentanmeldung EP 102018109067.6 beschrieben, entlang der Schraubenlinien bzw. der Zahnlängsrichtung betrachtet werden und ist dabei als reziproker Wert zum Schraubweg pro Werkzeugumdrehung der Schleifschnecke 2 definiert (in Fig. 5A ist dieser Schraubweg pro Werkzeugumdrehung mit ΔC bezeichnet). D.h., die Eingriffsdichte EgD definiert in diesem Fall die Anzahl der Eingriffe pro Schraubweg.

Die Eingriffsdichte EgD ist, wie in der genannten europäischen Patentanmeldung EP 102018109067.6 beschrieben, beim maximalen Schleifschnecken-Durchmesser deutlich geringer als beim minimalen Schleifschnecken-Durchmesser, der nach mehrfachem Abrichten der Schleifschnecke 2 erreicht wird.

Bei mindestens einem Teil der Ausführungsformen wird in einem vorbereitenden Verfahrensschritt, z.B. unter Einsatz einer Software oder eines Software-Moduls SM eine Sprungweite ΔS der relativen Sprungbewegung rechnerisch ermittelt. Die Sprungweite ΔS definiert bei diesen Ausführungsformen die Relativlage der Wälzlinien (bzw. der theoretischen Kontaktlinien tKl in Fig. 5B) bei der topologischen Wälzschleifbearbeitung mehrerer Zahnrad-Werkstücke 10.1, 10.2, 10.3 und 10.4 .

Bei mindestens einem Teil der Ausführungsformen wird die relative Sprungbewegung so gewählt, dass die Sprungbewegung nicht dazu führt, dass die darauffolgende topologische Wälzschleifbearbeitung inklusive des Shiftens aus den topologisch modifizierten Schneckenbereich 5 rausführt.

Vorzugsweise entspricht die Weglänge bei mindestens einem Teil der Ausführungsformen einem Bruchteil des Shiftweges pro Werkzeugumdrehung. Vorzugsweise beträgt die Weglänge bei mindestens einem Teil der Ausführungsformen weniger als 1% der Breite des modifizierten Schneckenbereichs beträgt.

Anstatt die Sprungbewegung durch eine Weglänge parallel zu der Werkzeugrotationsachse B zu definieren, kann sie auch durch eine andere Grösse definiert werden (z.B. durch eine Strecke parallel zur gewundenen Flankenlinie der Schleifschnecke 2).

Bei mindestens einem Teil der Ausführungsformen wird die relative Sprungbewegung parallel zu der Werkzeugrotationsachse B so definiert und/oder ausgeführt, dass die darauffolgende topologische Wälzschleifbearbeitung nur innerhalb eines topologisch modifizierten Schneckenbereichs 5 erfolgen kann. Zu diesem Zweck können z.B. die Grenzen des topologisch modifizierten Schneckenbereichs 5 durch relative oder absolute Grössen in einer Steuerung 110 und/oder in einer Software oder einem Software-Modul SM der Schleifmaschine 100 definiert sein.

Bei mindestens einem Teil der Ausführungsformen kommt eine Schleifmaschine 100 zum Einsatz, wie sie beispielhaft in Fig. 6 gezeigt ist. Die Schleifmaschine 100 umfasst eine Werkzeugspindel 1, die zum Aufnehmen und Drehantreiben einer Schleifschnecke 2 um eine Werkzeugrotationsachse B ausgelegt ist. Außerdem umfasst sie eine Werkstückspindel 3, die zum Aufnehmen und Drehantreiben eines Zahnrad-Werkstücks 10 einer Serie von Zahnrad-Werkstücken 10.1, 10.2 ausgelegt ist.

Die Schleifmaschine 100 kann weiterhin eine Abrichtvorrichtung 112 umfassen, die zum Aufnehmen und Drehantreiben eines Abrichters 4 ausgelegt ist. Weiterhin weist die Schleifmaschine 100 mehrere NC-gesteuerte Achsen auf, die Relativbewegungen zwischen der Schleifschnecke 2 und einem Zahnrad-Werkstück 10 auszuführen, die zum topologischen Wälzschleifen des Zahnrad-Werkstücks 10 und zum Abrichten erforderlich sind. Außerdem umfasst die Schleifmaschine 100 eine Steuerung 110, die mit der Schleifmaschine 100 so verbindbar ist (z.B. über eine interne oder externe Kommunikationsverbindung 111), dass nach dem topologischen Wälzschleifen eines ersten Zahnrad-Werkstücks 10.1 der Serie von Zahnrad-Werkstücken und vor dem topologischen Wälzschleifen eines zweiten Zahnrad-Werkstücks 10.2 der Serie von Zahnrad-Werkstücken eine relative Sprungbewegung ausführbar ist. Bei dieser Sprungbewegung handelt es sich, wie bereits erläutert, um eine kleine Relativbewegung zwischen der Werkstückspindel 3 und der Werkzeugspindel 1, respektive zwischen dem Werkstück 10.2 und der Schleifschnecke 2. Die Sprungbewegung erstreckt sich im Wesentlichen parallel oder schräg zu der Werkzeugrotationsachse B.

Die Schleifmaschine 100 kann bei mindestens einem Teil der Ausführungsformen Mittel 30 (z.B. ein portables Gerät) und/oder ein Software-Modul SM zur Nutzereingabe umfassen, die es einem Nutzer ermöglichen einen Parameter, vorzugsweise eine Eingriffsdichte EgD, auszuwählen oder einzugeben, wobei die relative Sprungbewegung anhand des Parameters, respektive anhand der Eingriffsdichte EgD ausgeführt wird.

Die Schleifmaschine 100 kann bei mindestens einem Teil der Ausführungsformen Mittel 30 (z.B. ein portables Gerät) und/oder ein Software-Modul SM zur Nutzereingabe umfassen, die es einem Nutzer ermöglichen eine Sprungweite ΔS der relativen Sprungbewegung auszuwählen oder einzugeben.

Anhand der Figuren 4A und 4B wird ersichtlich, dass sich durch das Ausführen der relativen Sprungbewegung die Lage der Schleifschnecke 2 gegenüber der Lage des Zahnrad-Werkstücks verändert. Außerdem kann sich durch das Ausspannen des ersten Zahnrad-Werkstücks 10.1 und das Einspannen des zweiten Zahnrad-Werkstücks 10.2 auch eine Veränderung der relativen Lage ergeben haben. Deswegen wird vorzugsweise vor dem Wälzschleifen eines Zahnrad-Werkstücks 10.1 und 10.2 jeweils ein Einmitten Se1 bzw. Se2 vorgenommen.

Fig. 5A zeigt, wie bereits eingangs beschrieben, eine stark schematisierte Abwicklung einer Zahnflanke 6 einer Schleifschnecke 2 in vergrößerter Darstellung. Es sind hier die theoretischen Kontaktlinien tKI in schematischer Form angedeutet, die sich beim konventionellen Wälzschleifen von 4 Werkstücken 10.1, 10.2, 10.3 und 10.4 ergeben.

In der Fig. 5B sind hingegen Details der Erfindung gezeigt. Die Fig. 5B zeigt eine stark schematisierte Abwicklung einer Zahnflanke 6 einer topologischen Schleifschnecke 2 in vergrößerter Darstellung. Es sind hier die theoretischen Kontaktlinien tKl1, tKl2, tKl3, tKl4 in schematischer Form angedeutet, die beim topologischen Schleifen von 4 Zahnrad-Werkstücken 10.1, 10.2, 10.3 und 10.4 entstehen, wenn jeweils eine relative Sprungbewegung, gemäß Erfindung, vor dem Schleifen eines jeden nachfolgenden Zahnrad-Werkstücks durchgeführt wird. Der Schraubweg pro Werkzeugumdrehung ist in Fig. 5B mit ΔD bezeichnet. Der Schraubweg pro Werkzeugumdrehung ΔD ist deutlich größer als der Schraubweg pro Werkzeugumdrehung ΔC, der in Fig. 5A für das konventionelle Wälzschleifen gezeigt ist.

Im Zusammenhang mit den Figuren 5A und 5B ist abschließend zu erwähnen, dass es sich bei den diskret gezeigten Kontaktlinien um theoretische Linien handelt. In der Praxis ergeben sich aufgrund der gegenseitigen Krafteinwirkungen eigentlich Kontaktzonen, die sich überlappen.

**Bezugszeichen**

| | |
|---|---|
| Werkzeugspindel | 1 |
| Schleifwerkzeug / Schleifschnecke | 2 |
| 1. Werkstückspindel | 3 |
| Abrichter | 4 |
| Schneckenbereich | 5 |
| Zahnflanke / Schneckenflanke | 6 |
| | |
| Zahnrad-Werkstück | 10; 10.1, 10.2, 10.3, 10.4 |
| | |
| Bedienelement | 30 |
| Kommunikationsverbindung | 31 |
| | |
| Schleifmaschine | 100 |
| Steuerung | 110 |
| Kommunikationsverbindung | 111 |
| Abrichtvorrichtung | 112 |
| Schwenkachse | A |
| Werkstückachse | C |
| | |
| Werkzeug(rotations)achse | B |
| Schneckenbreite | b0 |
| Breite des modifizierten Bereichs | bm |
| Zahnbreite | b2 |
| Schraubweg pro Werkzeugumdrehung | ΔC |
| Schraubweg pro Werkzeugumdrehung | ΔD |
| Zahnhöhe | h0 |
| | |
| Sprungweite | ΔS |
| Eingriffsdichte | EgD |
| linke Flanke | LF |
| Bezugsschrauben(linien)länge | I0* |
| | |
| rechte Flanke | RF |
| Software / Software-Modul | SM |
| Kontaktlinien | tKl |
| Vertikalachse | X |
| horizontale Linearachse | Y |
| horizontale Linearachse / Hubachse | Z |
| Axialvorschub / axiale Vorschubbewegung | Sa1, Sa2 |
| Einmitten | Se1, Se2 |
| Rückzugsbewegung | Sr1, Sr2 |
| Zustellbewegung | Sz1, Sz2 |
| Zahngrund | ZG |

## Patentansprüche

1. Verfahren zum kontinuierlichen Wälzschleifen von mindestens zwei Zahnrad-Werkstücken (10) mit einer topologisch modifizierten Schleifschnecke (2), die einen topologisch modifizierten Schneckenbereich (5) umfasst, um an den Zahnrad-Werkstücken (10) Zahnflanken (LF, RF) zu schleifen, die topologisch modifiziert sind, wobei das Verfahren mindestens die folgenden Schritte umfasst:
a) Bereitstellen eines ersten Zahnrad-Werkstücks (10.1),
b) Durchführen einer topologischen Wälzschleifbearbeitung durch das Ausführen von Relativbewegungen zwischen dem ersten Zahnrad-Werkstück (10.1) und der Schleifschnecke (2), die umfasst
- eine relative Zustellbewegung (Se1, Sz1),
- einen relativen Axialvorschub (Sa1), der parallel oder schräg zur Werkzeugrotationsachse (B) erfolgt, und
- eine relative Shiftbewegung,
c) Bereitstellen des zweiten Zahnrad-Werkstücks (10.2),
d) Ausführen einer relativen Sprungbewegung, die sich im Wesentlichen parallel oder schräg zu der Werkzeugrotationsachse (B) erstreckt, zwischen dem zweiten Zahnrad-Werkstück (10.2) und der Schleifschnecke (2),
e) Wiederholen des Schritts b) für das zweite Zahnrad-Werkstück (10.2).

2. Verfahren nach Anspruch 1, **dadurch gekennzeichnet, dass** die relative Sprungbewegung ein relatives Verschieben und ein relatives Verdrehen umfasst.

3. Verfahren nach Anspruch 2, **dadurch gekennzeichnet, dass** das relative Verschieben parallel zur Werkzeugrotationsachse (B) erfolgt und dass es durch eine Weglänge (ΔS) definiert ist, die kürzer ist als eine Breite (bm) des topologisch modifizierten Schneckenbereichs (5), wobei die Weglänge (ΔS) vorzugsweise weniger als 1% der Breite (bm) beträgt.

4. Verfahren nach einem der Ansprüche 1, 2 oder 3, **dadurch gekennzeichnet, dass** in einem vorbereitenden Verfahrensschritt ein Parameter, vorzugsweise eine Eingriffsdichte (EgD), ausgewählt oder vorgeben wird, und dass eine Sprungweite (ΔS) der relativen Sprungbewegung anhand des Parameters, respektive anhand der Eingriffsdichte (EgD) ermittelt wird.

5. Verfahren nach Anspruch 4, **dadurch gekennzeichnet, dass**
- es sich bei der Eingriffsdichte (EgD) um eine Größe handelt, die für das Wälzschleifen eines Zahnrad-Werkstücks definiert wurde, oder
- es sich bei der Eingriffsdichte um eine akkumulierte Maximalgröße handelt, die beim topologischen Schleifen nicht überschritten werden soll.

6. Verfahren nach einem der Ansprüche 1 bis 5, **dadurch gekennzeichnet, dass** sich das erste Zahnrad-Werkstück (10.1) aufgrund der relativen Sprungbewegung, die vor dem Wiederholen des Schritts b) für das zweite Zahnrad-Werkstück (10.2) ausgeführt wird, geometrisch von dem zweiten Zahnrad-Werkstück (10.2) unterscheidet.

7. Verfahren nach einem der Ansprüche 1 bis 5, **dadurch gekennzeichnet, dass** die relative Sprungbewegung durch eine Weglänge definiert ist, die einem Bruchteil des Shiftweges pro Werkzeugumdrehung entspricht.

8. Schleifmaschine (100) mit einer Spindel (1) zum Aufnehmen und Drehantreiben einer Schleifschnecke (2) um eine Werkzeugrotationsachse (B), mit einer Werkstückspindel (3) zum Aufnehmen und Drehantreiben eines Zahnrad-Werkstücks einer Serie von Zahnrad-Werkstücken (10.1, 10.2), mit einer Abrichtvorrichtung (112) zum Aufnehmen und Drehantreiben eines Abrichters (4) und mit mehreren NC-gesteuerten Achsen, die dazu ausgelegt sind zum Zwecke des topologischen Wälzschleifens Relativbewegungen zwischen der Schleifschnecke (2) und einem Zahnrad-Werkstück der Serie von Zahnrad-Werkstücken (10.1, 10.2) und zum Abrichten Relativbewegungen zwischen der Schleifschnecke (2) und dem Abrichter (4) auszuführen, wobei die Schleifmaschine (100) eine Steuerung (110) umfasst, die mit der Schleifmaschine (100) so verbunden oder verbindbar ist, dass nach dem topologischen Wälzschleifen eines ersten Zahnrad-Werkstücks (10.1) der Serie von Zahnrad-Werkstücken (10.1, 10.2) und vor dem topologischen Wälzschleifen eines zweiten Zahnrad-Werkstücks (10.2) der Serie von Zahnrad-Werkstücken (10.1, 10.2) eine relative Sprungbewegung zwischen der Werkstückspindel (3) und der Schleifschnecke (2) ausführbar ist, wobei sich diese Sprungbewegung im Wesentlichen parallel oder schräg zu der Werkzeugrotationsachse (B) erstreckt.

9. Schleifmaschine (100) nach Anspruch 8, **dadurch gekennzeichnet, dass** sie Mittel (30, SM) zur Nutzereingabe umfasst, die es einem Nutzer ermöglichen einen Parameter, vorzugsweise eine Eingriffsdichte (EgD), auszuwählen oder einzugeben, wobei die relative Sprungbewegung anhand des Parameters, respektive anhand der Eingriffsdichte (EgD) ausgeführt wird.

10. Schleifmaschine (100) nach Anspruch 8, **dadurch gekennzeichnet, dass** sie Mittel (30, SM) zur Nutzereingabe umfasst, die es einem Nutzer ermöglichen eine Sprungweite (ΔS) der relativen Sprungbewegung auszuwählen oder einzugeben.
